# EUROPÄISCHE PATENTANMELDUNG

(11) **EP 1 821 048 A2**
(43) Veröffentlichungstag der Anmeldung: **22.08.2007**
(21) Anmeldenummer: 07000734.9
(22) Anmeldetag: 16.01.2007
(51) Int. Cl.: F25B 9/00, F25B 45/00

(54) **Fahrzeugklimaanlage**

(30) Priorität: 17.02.2006 DE 102006007371
(71) Anmelder: Bayerische Motoren Werke Aktiengesellschaft, 80809 München (DE)
(72) Erfinder: Mager, Robert, Dr., 81249 München (DE); Morgenstern, Stefan, 81827 München (DE)

(57) **Zusammenfassung**

Fahrzeugklimaanlage (1) mit einem von einem Kältemittel durchströmten Kältemittelkreis, der Kältemittelkreis einen Ausgleichsbehälter (8) aufweist.

## Beschreibung

Die vorliegende Erfindung betrifft eine Fahrzeugklimaanlage gemäß dem Oberbegriff des Patentanspruches 1.

Aus der DE 100 59 369 A1 ist eine Fahrzeugklimaanlage mit einem Primärkreislauf und einem Sekundärkreislauf bekannt. Der Primärkreislauf ist ein Kältemittelkreislauf mit Verdichter, Verdampfer, Expansionsorgan und Kondensator. In dem Sekundärkreislauf wird durch eine Pumpe ein Wasser/Glysantin-Gemisch im Kreislauf umgepumpt und in dem Verdampfer abgekühlt. Der Sekundärkreislauf weist ferner einen Ausgleichsbehälter auf.

Für zukünftige Fahrzeuggenerationen werden Fahrzeugklimaanlagen entwickelt, die mit dem Kältemittel R744 (Kohlendioxid) betrieben werden. Kohlendioxid-Klimaanlagen für Fahrzeuge werden bis zu einer maximalen Füllmenge von 260 g/dm³ freies inneres Volumen der Anlage befüllt. Dieser Wert wurde durch den Arbeitskreis der Deutschen Automobilhersteller als obere Füllmengengrenze festgelegt, um bei hohen Umgebungstemperaturen unzulässig hohe Anlagenruhedrücke zu vermeiden. Eine Fahrzeugklimaanlage ist ein offenes System und besteht aus vielen miteinander verbundenen Einzelkomponenten. Um Kältemittelverluste über die Betriebszeit der Fahrzeugklimaanlage auszugleichen, wird der Kältemittelkreislauf üblicherweise bis zur maximal zulässigen Menge mit Kältemittel befüllt. Aus der Differenz zwischen der anfänglichen Füllmenge und der für einen sicheren Betrieb der Fahrzeugklimaanlage minimal erforderlichen Füllmenge und dem jährlichen, konzeptbedingten Kältemittelverlust ergibt sich das Serviceintervall der Fahrzeugklimaanlage, das aus Kundensicht so lang wie möglich sein sollte.

Ein Problem von Fahrzeugklimaanlagen besteht darin, dass der Teil des Kältemittels, der sich in den Leitungen der Fahrzeugklimaanlage befindet, in diesem Moment nicht zur Nutzung zur Verfügung steht, was insbesondere bei großen Leitungslängen zum Tragen kommt.. In diesem Zusammenhang relevant ist insbesondere die Leitung zwischen dem Niederdruckausgang des inneren Wärmetauschers und dem Eingangsanschluss des Expansionsventils, da in diesem Leitungsbereich die Dichte des Kältemittels während des Betriebs der Anlage am höchsten ist und sich somit relativ viel Kältemittel in diesem Leitungsabschnitt ansammeln kann. Da das System nur mit einer vorgegebenen maximalen Kältemittelmenge befüllt werden kann, verkürzt sich aufgrund der o.g. Effekte das Serviceintervall einer solchen Klimaanlage.

Aufgabe der Erfindung ist es, eine Fahrzeugklimaanlage zu schaffen, die längere Serviceintervalle ermöglicht und in allen auftretenden Betriebszustände zuverlässig arbeitet.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht in einer Fahrzeugklimaanlage mit einem Kältemittelkreislauf und einem Ausgleichsbehälter. Im Unterschied zu der eingangs genannten DE 100 59 369 A1 ist der Ausgleichsbehälter nicht in einen "Sekundärkreislauf" integriert, sondern in den Kältemittelkreislauf. Durch einen Ausgleichsbehälter im Kältemittelkreislauf wird zusätzliches Kältemittelvolumen in den Kältemittelkreislauf "integriert".

Vorzugsweise ist der Ausgleichsbehälter bzw. das Ausgleichsvolumen im Bereich zwischen dem inneren Wärmetauscher und dem Verdichter angeordnet, oder, genauer gesagt, zwischen einem Ausgang des inneren Wärmetauschers und dem Sauganschluss des Verdichters. In diesem Abschnitt des Kältemittelkreislaufs ist die Dichte des Kältemittels während des Betriebs der Anlage gering. Der Ausgleichsbehälter bzw. das Ausgleichsvolumen vergrößert das freie innere Volumen des Kältekreislaufs. Somit kann, ohne die maximal zulässige Füllmenge von 260 g/dm³ freies inneres Volumen der Anlage zu überschreiten, mehr Kältemittel in den Kältemittelkreislauf eingefüllt werden.

Hinsichtlich der Anordnung des Ausgleichsbehälters bzw. Ausgleichsvolumens sind sowohl durchströmte als auch nicht durchströmte Lösungen denkbar.

Der Ausgleichsbehälter kann als separates Bauteil ausgeführt sein. Alternativ dazu kann das Ausgleichsvolumen bzw. der Ausgleichsbehälter in ein anderes Bauteil des Kältekreislaufs integriert sein. Das Ausgleichsvolumen kann beispielsweise ein inneres Volumen von 300 ml - 600 ml haben.

Im Folgenden wird die Erfindung im Zusammenhang mit der Zeichnung näher erläutert. Es zeigen:

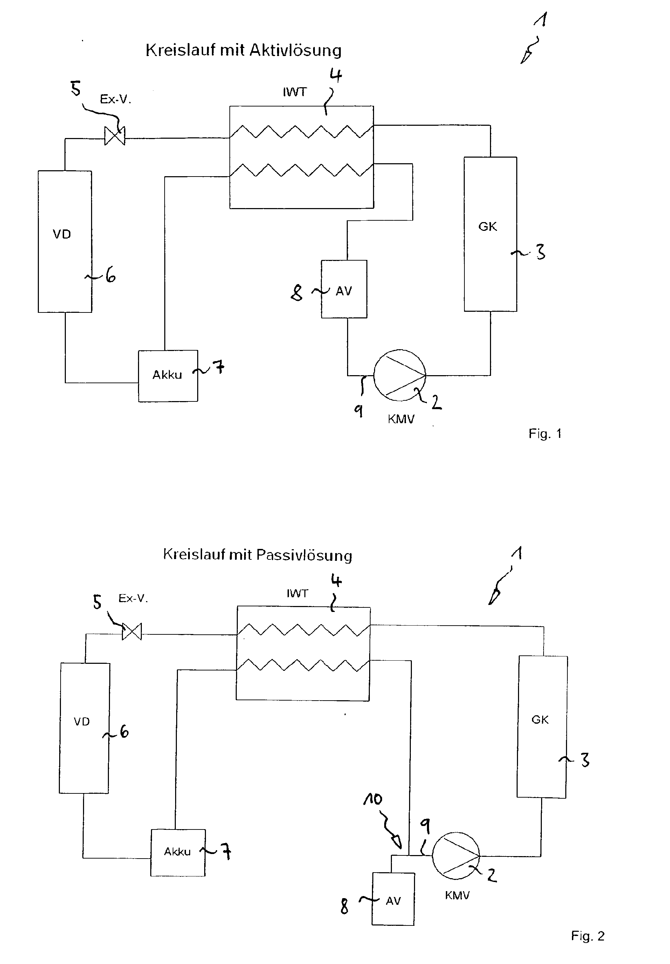

- Figuren 1 - 4: verschiedene Ausführungsbeispiele gemäß der Erfindung.

Figur 1 zeigt das Schema einer Fahrzeugklimaanlage 1 mit einem Verdichter 2, einem Gaskühler bzw. Kondensator 3, in dem das von dem Verdichter 2 verdichtete Kältemittel abgekühlt wird. Nach dem Gaskühler 3 durchströmt das Kältemittel einen inneren Wärmetauscher 4 und wird über ein Expansionsorgan 5 entspannt. Das expandierte Kältemittel durchströmt dann einen Verdampfer 6, wo es Wärme aufnimmt. Nach dem Verdampfer 6 durchströmt das Kältemittel einen Akku (Sammler) 7, erneut den inneren Wärmetauscher 4 und ein Ausgleichsvolumen 8. Das Ausgleichsvolumen 8 bzw. der Ausgleichsbehälter 8 ist zwischen dem inneren Wärmetauscher 4 und einem Sauganschluss 9 des Verdichters 2 angeordnet.

Figur 2 zeigt eine Variante des Ausführungsbeispiels der Figur 1. Im Unterschied zum Ausführungsbeispiel der Figur 1 ist der Ausgleichsbehälter 8 nicht aktiv von Kältemittel durchströmt. Der Ausgleichsbehälter 8 weist also keinen dezidierten Eingangsanschluss und keinen dezidierten Ausgangsanschluss auf, sondern ist über einen Leitungsabzweig 10, der im Bereich zwischen dem inneren Wärmetauscher 4 und dem Sauganschluss 9 des Verdichters 2 angeordnet ist, an den Kältekreislauf angeschlossen.

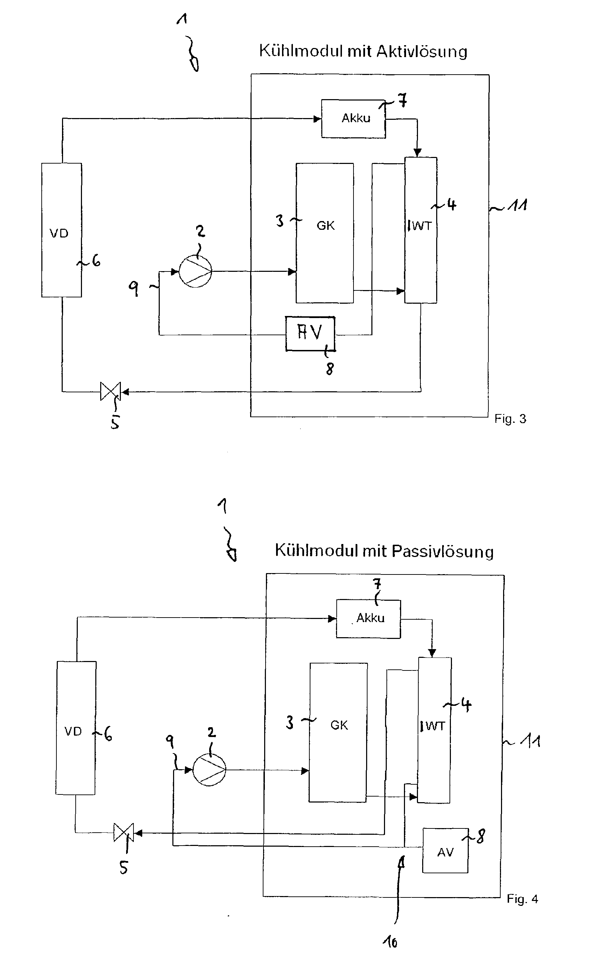

Figur 3 zeigt ein Ausführungsbeispiel mit einem durchströmten Ausgleichsbehälter 8, entsprechend dem Ausführungsbeispiel der Figur 1. Im Unterschied zum Ausführungsbeispiel der Figur 1 sind hier die Komponenten Gaskühler 3, innerer Wärmetauscher 4, Akku 7 und Ausgleichsbehälter 8 baulich in einem sogenannten Kühlmodul 11 zusammengefasst.

Das Ausführungsbeispiel der Figur 4 weist entsprechend dem Ausführungsbeispiel der Figur 2 einen undurchströmten Ausgleichsbehälter 8 auf. Auch hier sind die Komponenten Gaskühler 3, innerer Wärmetauscher 4, Akku 7 und Ausgleichsbehälter 8 baulich zu der Baugruppe "Kühlmodul 11" zusammengefasst.

## Patentansprüche

1. Fahrzeugklimaanlage (1) mit einem von einem Kältemittel durchströmten Kältemittelkreis,
**dadurch gekennzeichnet, dass** der Kältemittelkreis einen Ausgleichsbehälter (8) aufweist.

2. Fahrzeugklimaanlage nach Anspruch 1,
**dadurch gekennzeichnet, dass** das Kältemittel Kohlendioxid bzw. ein Kohlendioxid enthaltendes Gemisch ist.

3. Fahrzeugklimaanlage nach Anspruch 1 oder 2,
**dadurch gekennzeichnet, dass** der Kältemittelkreis einen inneren Wärmetauscher (4) und einen Verdichter (2) aufweist, wobei der Ausgleichsbehälter (8) zwischen dem inneren Wärmetauscher (4) und einem Sauganschluss (9) des Verdichters (2) angeordnet ist.

4. Fahrzeugklimaanlage nach einem der Ansprüche 1 - 3,
**dadurch gekennzeichnet, dass** der Ausgleichsbehälter (8) an eine Verbindungsleitung angeschlossen ist, welche den inneren Wärmetauscher (4) mit dem Sauganschluss (9) des Verdichters (2) verbindet.

5. Fahrzeugklimaanlage nach einem der Ansprüche 1 - 3,
**dadurch gekennzeichnet, dass** der Ausgleichsbehälter (8) in eine den inneren Wärmetauscher (4) mit dem Sauganschluss (9) des Verdichters (2) verbindende Leitung integriert und somit von Kältemittel durchströmt ist.

6. Fahrzeugklimaanlage nach einem der Ansprüche 1 - 5,
**dadurch gekennzeichnet, dass** der Ausgleichsbehälter (8) ein freies inneres Volumen von 300 - 600 ml aufweist.
